(19)

**Europäisches Patentamt**
**European Patent Office**
**Office européen des brevets**

(11) **EP 4 524 635 B1**

(12) **EUROPEAN PATENT SPECIFICATION**

(45) Date of publication and mention
of the grant of the patent:
**14.01.2026 Bulletin 2026/03**

(21) Application number: **24735847.6**

(22) Date of filing: **24.01.2024**

(51) International Patent Classification (IPC):
**G02B 6/44** *(2006.01)*

(52) Cooperative Patent Classification (CPC):
**G02B 6/4432; G02B 6/4436; G02B 6/44386;**
**Y02A 30/00**

(86) International application number:
**PCT/CN2024/073899**

(87) International publication number:
**WO 2025/020485 (30.01.2025 Gazette 2025/05)**

(54) **ANTI-FREEZING, FIRE-RESISTANT AND RODENT-RESISTANT OPTICAL-FIBER CABLE**

FROSTSCHUTZ-, FEUER- UND NAGETIERBESTÄNDIGES GLASFASERKABEL

CÂBLE À FIBRES OPTIQUES ANTIGEL, RÉSISTANT AU FEU ET RÉSISTANT AUX RONGEURS

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **21.07.2023 CN 202310899062**

(43) Date of publication of application:
**19.03.2025 Bulletin 2025/12**

(73) Proprietor: **JIANGSU ZHONGTIAN TECHNOLOGY**
**CO., LTD.**
**Nantong, Jiangsu 226000 (CN)**

(72) Inventors:
• **XU, Jianqiu**
**Nantong, Jiangsu 226000 (CN)**
• **MIAO, Bin**
**Nantong, Jiangsu 226000 (CN)**
• **ZHAO, Jing**
**Nantong, Jiangsu 226000 (CN)**

• **MIAO, Xiaoming**
**Nantong, Jiangsu 226000 (CN)**
• **TAN, Feng**
**Nantong, Jiangsu 226000 (CN)**
• **LIU, Yuqin**
**Nantong, Jiangsu 226000 (CN)**
• **QIAN, Huihui**
**Nantong, Jiangsu 226000 (CN)**

(74) Representative: **J A Kemp LLP**
**80 Turnmill Street**
**London EC1M 5QU (GB)**

(56) References cited:
CN-A- 110 596 838          CN-A- 110 596 838
CN-A- 112 435 792          CN-A- 113 035 417
CN-A- 114 283 982          CN-A- 115 657 231
CN-A- 115 657 231          CN-A- 116 626 833
CN-U- 206 193 295          CN-U- 215 067 449
CN-U- 217 385 924          JP-A- H0 756 066
KR-A- 20210 011 344        NO-B- 118 753
US-A1- 2006 193 569        US-A1- 2020 271 881

## Description

### TECHNICAL FIELD

The present invention relates to the technology field of optical cables, and in particular to an anti-freezing, fire-resistant and rat-proof optical cable.

### BACKGROUND

With the rapid development and application of information technology such as Internet of Things, cloud computing, and big data, the demand for information transmission in various industries is becoming increasingly strong, and the coverage of communication networks is also becoming more and more extensive and its importance is constantly increasing. At the same time, the loss caused by the abnormal interruption of communication lines is also increasing, which puts forward higher requirements for the structural design of optical cable. Due to the vast territory of China, the ambient temperature is not the same everywhere, especially in the inland area with relatively high altitude, where the temperature difference between day and night is much greater than that in other areas, and the maximum temperature difference can reach 50°C-70°C. The optical cable in this type of application environment is extremely vulnerable to freezing failure, resulting in line communication interruption accidents.

The existing optical cable often includes a plurality of optical units, a fire-resistant layer, an inner sheath, an armor layer and an outer sheath which are sequentially disposed from inside to outside, in which one fire-resistant layer is disposed around the plurality of optical units (that is, one fire-resistant layer is covered on the periphery of the plurality of optical units), so as to make the optical cable have fire-resistant and rat-proof function. However, when the optical cable suffers from the situation that an external ambient temperature rises or falls sharply, an internal temperature of the optical cable changes under the influence of the ambient temperature, resulting in the problem of unstable optical signal transmission.

CN115657231 discloses a non-metallic fire-resistant, freeze-resistant, and rodent-resistant optical cable, including an outer sheath, an armor layer, an inner sheath, a buffer layer, a central strength member, and an optical unit assembly. The central strength member is disposed within the inner sheath, and the inner wrapping layer is in contact with the inner wall of the inner sheath. The optical unit groups are uniformly distributed on the outer circumferential surface of the central reinforcement member. The outer circumference of the optical unit groups contacts the inner wrapping layer and the central reinforcement member within the inner sheath. An outer sheath is arranged on the outer surface of the inner sheath for the purpose of providing the outermost protective layer. This invention can significantly reduce procurement costs associated with replacing optical cables due to damage caused by rodent bites, fires, or freezing and compression. Construction costs for the line and daily maintenance costs will also decrease accordingly. Additionally, it effectively reduces the frequency of power communication failures, enhancing the reliability and safety of the power grid.

### SUMMARY

The main purpose of the present invention is to provide an anti-freezing, fire-resistant and rat-proof optical cable, which can solve the problem in the art that the internal temperature of the optical cable changes with the change of the external environment temperature, affecting the stability of optical signal transmission. The present invention is set out in the appended set of claims.

To realize the above purposes, according to one aspect of the present invention, there is provided an anti-freezing, fire-resistant and rat-proof optical cable, including a cable core, an energy storage insulation layer, an anti-freezing layer, an armor layer and an outer sheath which are sequentially disposed from inside to outside. The cable core includes a plurality of optical units disposed in a circumferential direction, and a periphery of each optical unit is provided with a fire-resistant layer; the armor layer includes a plurality of glass-fiber-reinforced plastic rods disposed in a circumferential direction, and the plurality of glass-fiber-reinforced plastic rods are disposed on an inner side of the outer sheath; the anti-freezing layer includes an anti-freezing base and a capsule A and a capsule B disposed circumferentially inside the anti-freezing base, the capsule A and the capsule B are constructed to be capable of undergoing chemical reaction and releasing heat under a preset condition; and the energy storage insulation layer is constructed to be capable of storing heat energy.

Further, the energy storage insulation layer includes a plurality of phase-transition energy storage capsules disposed along a circumferential direction, and a phase-transition material is provided inside the phase-transition energy storage capsules to enable the phase-transition energy storage capsules to collect and store heat when an external temperature rises, and release heat when the external temperature drops or is constant.

According to the claimed invention, the capsule A and the capsule B are identical in number, the capsule A includes a first capsule body and a first reactant disposed in the first capsule body, and the first reactant includes polyester polyol, water-soluble silicone oil and distilled water; the capsule B includes a second capsule body and a second reactant disposed in the second capsule body, and the second reactant includes diphenylmethane diisocyanate, triethylene diamine and dibutyltin dilaurate, where a mass ratio of polyester polyol to diphenylmethane diisocyanate ranges from 1.6 to 3.33.

According to the claimed invention, at least one of the first capsule body and the second capsule body includes a first protective layer and a second protective layer disposed in the first protective layer, and an elastic modulus of the second protective layer is greater than an elastic modulus of the first protective layer.

Further, a reactant is provided in the second protective layer, and the second protective layer is provided with a plurality of effusion-holes.

Further, a reactant is provided in a cavity enclosed by the second protective layer and in a gap formed between the first protective layer and the second protective layer.

Further, the anti-freezing, fire-resistant and rat-proof optical cable also includes at least two glass-fiber-reinforced plastic rods disposed circumferentially inside the anti-freezing layer at intervals, and the at least two glass-fiber-reinforced plastic rods divide an interior of the anti-freezing layer into at least two separate spaces.

Further, the anti-freezing base is capable of undergoing elastic deformation under freezing environment. An elastic modulus of capsule body of the capsule A is greater than an elastic modulus of the anti-freezing base, and an elastic modulus of capsule body of the capsule B is greater than an elastic modulus of the anti-freezing base.

Further, the anti-freezing layer is constructed to be capable of having a buffer function under the preset condition, and the preset condition is that: a radial deformation degree $\eta$ of a side of the optical cable is greater than or equal to a thickness r of the anti-freezing layer.

Further, a thickness of the anti-freezing layer has a range expressed as:

$$r \geq \frac{D_0 + \sigma_{\max}}{2*\varepsilon} \left( \sqrt{\frac{\rho_{\text{water}}}{\rho_{\text{ice}}}} - 1 \right),$$

where, $D_0$ is an overall outer diameter of the optical cable, $\sigma_{\max}$ is a maximum thickness of an ice layer outside the optical cable, $\rho_{\text{water}}$ is a density of water at 0°C, $\rho_{\text{ice}}$ is a density of ice at 0°C, and $\varepsilon$ is a deformation coefficient of the anti-freezing layer.

Further, the anti-freezing, fire-resistant and rat-proof optical cable also includes a flame-retardant structure disposed in the anti-freezing layer; and/or, the anti-freezing, fire-resistant and rat-proof optical cable also includes a rat-proof structure disposed in the anti-freezing layer.

Further, each glass-fiber-reinforced plastic rod is also provided with a rat-repelling structure.

Further, the rat-repelling structure is at least one accommodating groove disposed in the glass-fiber-reinforced plastic rod, and a rat-repelling drug powder located in the accommodating groove.

Further, the accommodating groove is one in number, and the accommodating groove spirally surrounds an outer wall of the each glass-fiber-reinforced plastic rod; or, the accommodating groove is at least two in number, at least two accommodating grooves are arranged circumferentially around the glass-fiber-reinforced plastic rod at intervals, and each accommodating groove extends along an axial direction of the glass-fiber-reinforced plastic rod.

Further, the anti-freezing, fire-resistant and rat-proof optical cable also includes a first water-blocking layer disposed between the cable core and the energy storage insulation layer, and a second water-blocking layer disposed between the armor layer and the outer sheath; and/or, the fire-resistant layer is made of ceramicized flame retardant polyolefin.

By applying the technical solution of the present invention, the capsule A and the capsule B are provided. Under freezing environment (that is, when the external temperature is less than 0°C), the condensed ice layer on an outer wall of the optical cable imposes radial pressure on the optical cable, and the capsule A and the capsule B break and generate polyaddition reaction. The heat energy generated by the reaction can increase the internal temperature of the optical cable, avoiding large fluctuations in the internal temperature of the optical cable with the decrease of the external temperature. In this way, it is possible to maintain relatively stable temperature environment in an interior of the optical cable, and slowly reduce the temperature, thereby avoiding the problem of increased loss of the optical signal transmission caused by the decrease in temperature. At the same time, by providing the energy storage insulation layer which can absorb heat energy and store the heat energy inside it, on the one hand, when the external environment temperature drops sharply, the energy storage insulation layer can absorb and store the heat energy released by the chemical reaction to avoid the internal temperature of the optical cable dropping sharply with the external temperature; on the other hand, when the external environment temperature rises sharply, the energy storage insulation layer can also store the heat energy transmitted by the external environment to avoid excessive internal temperature of the optical cable. In this way, the energy storage insulation layer can play the role of heat buffering and internal temperature regulation, thereby ensuring the stability of the internal temperature of the optical cable, and avoiding the problem of unstable optical signal transmission caused by the sudden rise or drop of the internal temperature of the optical cable. The fire-resistant layer, the energy storage insulation layer, the anti-freezing layer and the armor layer work together and cooperate with each other, so that the optical cable has the functions of insulation, anti-freezing, fire-resistance and rat-proofing. When freezing, fire or rat biting occurs, the internal optical fiber can be protected from damage, so as to ensure the normal operation of the optical cable, improve the reliability and stability of the optical cable operation, and extend the service life of the optical cable.

## BRIEF DESCRIPTION OF DRAWINGS

The accompanying drawings of specification forming part of the present application are used to provide further understanding of the present invention. The schematic embodiments of the present invention and description thereof are used to interpret the present invention and do not constitute undue definition for the present invention. In the accompanying drawings:

FIG. 1 shows a structurally schematic diagram of an embodiment of an anti-freezing, fire-resistant and rat-proof optical cable of the present invention;

FIG. 2 shows a structurally schematic diagram of an anti-freezing layer of the anti-freezing, fire-resistant and rat-proof optical cable in FIG. 1;

FIG. 3 shows a structurally schematic diagram of an embodiment of a capsule A or a capsule B of the anti-freezing layer in FIG. 2;

FIG. 4 shows a structurally schematic diagram of another embodiment of the capsule A or the capsule B of the anti-freezing layer in FIG. 2;

FIG. 5 shows a structurally schematic diagram of another embodiment of the anti-freezing, fire-resistant and rat-proof optical cable in FIG. 1;

FIG. 6 shows a structurally schematic diagram of an embodiment of a non-metallic glass-fiber-reinforced plastic rod of an armor layer of the anti-freezing, fire-resistant and rat-proof optical cable in FIG. 1; and

FIG. 7 shows a structurally schematic diagram of another embodiment of a non-metallic glass-fiber-reinforced plastic rod of the armor layer of the anti-freezing, fire-resistant and rat-proof optical cable in FIG. 1.

Where, the above accompanying drawings include the following reference numbers:
1: optical fiber; 2: loose sleeve; 3: fire-resistant layer; 4: water-blocking material; 5: central stiffener; 9: armor layer; 91: accommodating groove; 10: outer sheath; 61: first water-blocking layer; 62: second water-blocking layer; 63: energy storage insulation layer; 64: anti-freezing layer; 65: anti-freezing base; 661: first protective layer; 662: second protective layer; 663: effusion-hole.

## DESCRIPTION OF EMBODIMENTS

It should be noted that embodiments of the present invention and features thereof can be combined with each other without conflict. The present invention will be described in detail below with reference to the accompanying drawings by conjunction with embodiments.

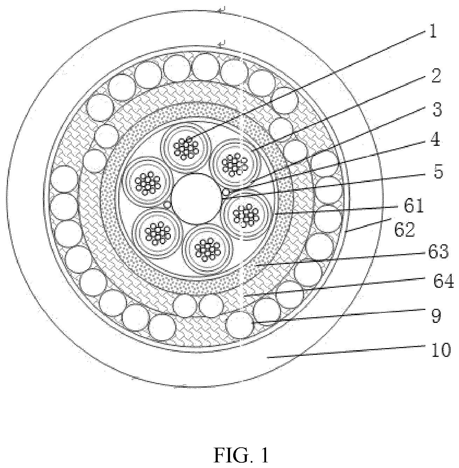

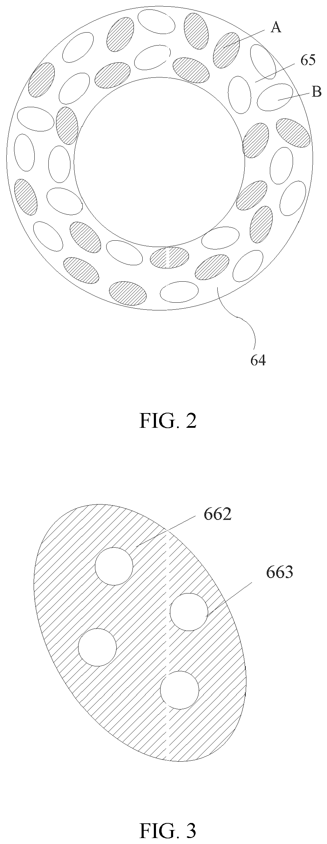

As shown in FIGS. 1 and 2, an embodiment of the present invention provides an anti-freezing, fire-resistant and rat-proof optical cable. The an anti-freezing, fire-resistant, rat-proof optical cable includes a cable core, an energy storage insulation layer 63, an anti-freezing layer 64, an armor layer 9 and an outer sheath 10, which are sequentially disposed from inside to outside; the cable core includes a plurality of optical units disposed in a circumferential direction, and a periphery of each optical unit is provided with a fire-resistant layer 3; the armor layer 9 includes a plurality of glass-fiber-reinforced plastic rods disposed in a circumferential direction, and the plurality of non-metallic glass-fiber-reinforced plastic rods are disposed in a resin-cured mode on an inner side of the outer sheath 10; the anti-freezing layer 64 includes an anti-freezing base 65 and capsules A and capsules B disposed inside the anti-freezing base 65 in a circumferential direction. The capsule A and the capsule B are constructed to be capable of undergoing biochemical reaction and releasing heat under a preset condition; and the energy storage insulation layer 63 is constructed to be capable of storing heat energy..

It should be noted that the above preset condition refers to the external pressure that is applied to the optical cable and sufficient to rupture the capsule A and the capsule B.

In the above-mentioned technical solution, a periphery of each optical unit is provided with a fire-resistant layer 3, which can play a role of fire-resistance and flame retardancy and protect an optical fiber inside the optical unit from damage. Compared with the solution of setting one fire-resistant layer 3 outside a plurality of optical units in the prior art, the fire-resistant layer 3 of the present invention forms a stable space for the internal optical units. On the one hand, the problem of the optical fiber fracture caused by the collapse of the internal space of the optical unit due to the cooling contraction can be avoided after the combustion of the optical cable is completed; on the other hand, when one fire-resistant layer 3 fails, only the optical unit in this fire-resistant layer 3 is interrupted, which can avoid the problem of affecting all optical units, thereby ensuring the stability of optical fiber transmission. Setting a plurality of glass-fiber-reinforced plastic rods not only increases the strength of the optical cable but also greatly improves the rat-proof performance of the optical cable. Because the glass fiber is very fine and brittle, in the process of biting by rat, the glass fiber in the crushed state will stab the mouth of rat, bring pain and forcing the rat to stop biting, thereby providing a rat-proof effect. In addition, an non-metallic glass fiber only has a thermal conductivity of 1.25KJ/(m•h•K) to 1.67KJ/(m•h•K) at room temperature, which is 1/100-1/1000 of metal materials; in the case of instantaneous ultra-high temperature, it can effectively block heat conduction, and thus is an ideal thermal protection and ablation resistant material, which can enhance the fire-resistant property of optical cable to a certain extent.

Through the above-mentioned settings, the capsule A and the capsule B are provided. Under freezing environment (that is, when the external temperature is less than 0°C), the condensed ice layer on an outer wall of the optical cable imposes radial pressure on the optical cable, and the capsule A and the capsule B break and generate polyaddition reaction. The heat energy generated by the reaction can increase the internal temperature of the optical cable, avoiding large fluctuations in the internal temperature of the optical cable with the decrease of the external temperature. In this way, it is possible to maintain relatively stable temperature environment in an interior of the optical cable, and slowly reduce the temperature, thereby avoiding the problem of increased loss of the optical signal transmission caused by the decrease in temperature. At the same time, by providing the energy storage insulation layer 63 which can absorb heat energy and store the heat energy inside it, on the one hand, when the external environment temperature drops sharply, the energy storage insulation layer 63 can absorb and store the heat energy released by the chemical reaction to avoid the internal temperature of the optical cable dropping sharply with the external temperature; on the other hand, when the external environment temperature rises sharply, the energy storage insulation layer 63 can also store the heat energy transmitted by the external environment to avoid excessive internal temperature of the optical cable. In this way, the energy storage insulation layer 63 can play the role of heat buffering and internal temperature regulation, thereby ensuring the stability of the internal temperature of the optical cable, and avoiding the problem of unstable optical signal transmission caused by the sudden rise or drop of the internal temperature of the optical cable. The fire-resistant layer, the energy storage insulation layer, the anti-freezing layer and the armor layer work together and cooperate with each other, so that the optical cable has the functions of insulation, anti-freezing, fire-resistance and rat-proofing. When freezing, fire or rat biting occurs, the internal optical fiber can be protected from damage, so as to ensure the normal operation of the optical cable, improve the reliability and stability of the optical cable operation, and extend the service life of the optical cable.

In an embodiment of the present invention, the energy storage insulation layer 63 includes a plurality of phase-transition energy storage capsules disposed along a circumferential direction, and phase-transition materials are provided inside the phase-transition energy storage capsules to enable the phase-transition energy storage capsules to collect and store heat when the external temperature rises, and release heat when the external temperature drops or is constant.

In the above-mentioned technical solution, the energy storage insulation layer 63 also includes an energy storage insulation substrate, and the phase-transition energy storage capsules are disposed in the energy storage insulation substrate. Where, the energy storage insulation substrate adopts high-performance low-smoke halogen-free flame retardant polyolefin material, and its typical indicators are as follows: density of $1.52\pm0.02\text{g/cm}^3$, tensile strength≥13.0MPa, elongation at break≥180%, oxygen index not less than 36%, maximum specific optical density under flame combustion not more than 60, Shore hardness HA≥80, and a wall thickness of optical cable sheath ranging from 0.5mm to 2.5mm.

It should be noted that the heat energy storage is a measure of collecting and storing excess energy and releasing it at the most needed time and place, which can be achieved by a variety of technologies. Where, because the phase-transition material can store or release a lot of latent heat in a constant temperature range, the phase-transition heat storage is a very efficient technology in heat energy storage, which has been widely used in the field of heat storage. The solid-liquid phase-transition material not only has low cost, but also has relatively high latent heat of phase transition, which is a relatively ideal phase-transition material. Therefore, in an embodiment of the present invention, the phase-transition energy storage capsule takes the phase-transition material as a core material, and uses organic or inorganic materials to cover it to form an outer shell with high mechanical strength, high thermal stability and high permeability resistance, finally forming capsule particles ranging from a few nanometers to a few microns. The shape of capsule structure is not unique and is oval, spherical and tubular, etc., the core may also be single or multiple; and usually, the phase-transition energy storage capsules prepared are spherical and follow the core-shell structure.

In an embodiment of the present invention, an organic low-eutectic mixture is selected as the phase-transition material, specifically low eutectic mixture formed by oleic acid, capric acid, and hexadecane (OA-CA-HD). The above three materials are conventional phase-transition materials, and a mass ratio or volume ratio of the three materials depends on the temperature range of the phase transition. In one optional embodiment of the present invention, the volume ratio of the three materials are 70% to 90% oleic acid, 10% to 30% capric acid, and 10% to 30% hexadecane. Microencapsulation is carried out by using styrene-divinylbenzene copolymer as a shell material (that is, the phase-transition energy storage capsule of the present invention is a microcapsule). The phase transition temperature has a range of 14.1°C-24.0°C, and the latent heat of melting is 127.3J/g. Thus, under the normal operating temperature of the optical cable, the energy storage insulation layer can effectively store heat energy, ensuring the relative stability of the internal temperature of the optical cable under low temperature operation.

In another embodiment of the present invention, the phase-transition material of the phase-transition energy storage capsule can also be selected from paraffin/butyl stearate, n-eicosane/nonadecane.

Through the above-mentioned settings, the energy storage insulation layer can maintain the internal temperature of the optical cable to be relatively stable for a certain period in the environment where the temperature drops or rises sharply. By the heat stored by the phase-transition energy storage capsule, it is possible to adjust the internal temperature of the optical cable to a certain extent, playing a certain role of insulation, and preventing the case of increased optical signal loss caused by the sudden drop in temperature. At the same time, when the external temperature rises, the phase-transition insulation layer can store heat energy, preventing the internal temperature of the optical cable from overheating, and playing the role of heat buffering and internal temperature regulation. Since the polyaddition reaction occurring anti-freezing layer 64 is an exothermic reaction, the phase-transition energy storage capsule can store heat, collect and use the heat energy generated in the addition polymerization reaction, and slowly release heat after the polyaddition reaction is finished, completing the adjustment and insulation function of the heat release from reaction-the heat storage from the phase-transition energy storage capsule-the heat release from the phase-transition energy storage capsule, thereby ensuring the stability of the internal temperature of the optical cable and no large temperature fluctuation, and ensuring the stability of the internal optical fiber transmission performance.

In an embodiment of the present invention, the proportion and number of phase-transition energy storage capsules placed in the energy storage insulation layer are set according to the requirements of the trial environment and size of optical cable.

As shown in FIG. 1, in embodiments of the present invention, a cable core also includes a central stiffener 5. A plurality of optical units are disposed on a periphery of the central stiffener 5, a water-blocking material 4 is also provided at the gap between the central stiffener 5 and a plurality of optical units, each optical unit includes a loose sleeve 2 and a plurality of optical fibers 1 disposed in the loose sleeve 2, and a fiber jelly is filled between the plurality of optical fibers 1.

As shown in FIG. 2, in embodiments according to the claimed invention, the capsule A and the capsule B are the same in number, and the capsule A includes a first capsule body and a first reactant disposed in the first capsule body, and the first reactant includes polyester polyol, water-soluble silicone oil and distilled water. The capsule B includes a second capsule body and a second reactant disposed in the second capsule body, and the second reactant includes diphenylmethane diisocyanate, triethylene diamine and dibutyltin dilaurate, where a mass ratio of polyester polyol to diphenylmethane diisocyanate ranges from 1.6 to 3.33.

In the above-mentioned technical solution, the capsule A is made of polyester polyol, water-soluble silicone oil and distilled water in a mass ratio of 100:1:2.5; the capsule B is made of diphenylmethane diisocyanate, triethylene diamine and dibutyltin dilaurate in a mass ratio of 35:1:0.1. The water-soluble silicone oil in the capsule A is a foam stabilizer, the distilled water is a foaming agent, and the triethylene diamine and dibutyltin dilaurate in the capsule B are catalysts. The capsule A and the capsule B are solidified with resin on a periphery of the energy storage insulation layer 63 in a number ratio of 1:1. The capsule body is prepared by a polyurea-formaldehyde resin, and in an embodiment of the present invention, the capsule body has a typical size of an outer diameter of 2.0mm * a body length of 4.0mm.

Through the above-mentioned settings, when the optical cable is squeezed by an external force, the anti-freezing base 65 first produces deformation for buffering, when the deformation of the anti-freezing base 65 is not enough to offset the external force, the capsules A and the capsules B are triggered to react for secondary buffering. Specifically, when the external force on the optical cable reaches the buffer limit value of anti-freezing base 65, the capsules A and the capsules B begin to crack under the force, and at this point, active ingredients in the capsules A and the capsules B produce polyaddition reaction after contact, and quickly generate foamed polyurethane. Since a volume of the foamed polyurethane generated by the polyaddition reaction is greater than a sum of volume of the original reactant (generally, the volume of the foamed polyurethane generated by the reaction expands to 5 times to 30 times the volume of the original reactant), the foamed polyurethane will fill into the armor layer 9 and the gap between respective layers of the optical cable structure, thereby expanding the buffering range. In addition, when the outer sheath 10 of the optical cable is damaged by rat bites, the foamed polyurethane generated by the polyaddition reaction of the capsules A and the capsules B under stress damage can also play a certain repairing role in the outer sheath 10, which can prevent the erosion of the internal structure of the optical cable by water vapor and external force to a certain extent.

It should be noted that since the foamed polyurethane generated by the reaction of the capsules A and the capsules B is a buffer material, the foamed polyurethane has a porous structure that has high energy absorption rate, good compressive buffer effect, high rebound rate after compression, and is not easy to produce plastic deformation after long-term repeated use, thereby effectively protecting the optical fiber inside the optical cable. In addition, the foamed polyurethane also has the advantages of low density, cold insulation, heat insulation, low heat conductivity and stability, etc. The foamed polyurethane has low density, high strength, excellent compression performance, low moisture absorption, long service life, low thermal conductivity, and good temperature resistance, it can be used in the environment of -50°C to 150°C, and adding a flame retardant material in the formula can also achieve good self-flame retardant and fire resistant performance. In addition, the foamed polyurethane can be selected in the range of 10MPa to 700MPa elastic modulus by adjusting the formula according to different usage environment, and the application scenarios are wide.

Compared with the direct use of foamed polyurethane, the present invention adopts the solution of reacting two capsules with different components after they being subjected to force, which has the following effects: when the external pressure of the present invention does not reach the buffer limit value of the anti-freezing base 65, the capsule A and the capsule B remain in the capsule form (that is, the capsule does not break), and will not affect the mechanical (anti-bending) performance of the optical cable; after the capsule body is cracked by force, the mixture in the capsule A and the capsule B is liquid, and due to the flow characteristics of liquid, the mixture can fill the gaps in the internal structure of the optical cable, thereby expanding the buffering range.

In another embodiment of the present invention, the composition and proportion of the capsule A and the capsule B can be adjusted according to the requirements of use so as to meet the requirements of elastic modulus, hardness, foaming speed, and reaction time of the anti-freezing layer 64 in the usage process.

For example, in an embodiment of the present invention, the foaming agent in the capsule A may be selected from liquid carbon dioxide, chloro-fluoro alkanes, hydrofluoric acid, pentane, cyclopentane, etc.; and the foam stabilizer may be selected from water-soluble polyether siloxane, etc. The catalyst in the capsule B can be selected from one or more of amines and tins, such as triethylene diamine, n-alkylmorphine, and dibutyltin dilaurate.

In embodiments of the present invention, under freezing environment, the anti-freezing base 65 can undergo elastic deformation, and an elastic modulus of the capsule body of capsule A is greater than an elastic modulus of the anti-freezing base 65, and an elastic modulus of the capsule body of capsule B is greater than the elastic modulus of the anti-freezing base 65.

In the above-mentioned technical solution, in the case of lateral compression on the exterior of optical cable, the anti-freezing base 65 provides a certain buffer space to prevent the internal optical units from being pressed, which results in increased optical fiber transmission loss or breakage of the optical units. Due to different elastic modulus, when pressed by external force, the anti-freezing base 65 with smaller elastic modulus first produces elastic deformation. When the deformation of anti-freezing base 65 is not enough to offset the external force (that is, when the external force on the optical cable reaches the buffer limit value of anti-freezing base 65), the capsule A and the capsule B begin to break, and the internal reactants undergo chemical reaction for secondary buffering.

Through the above-mentioned settings, the capsule A and the capsule B, and anti-freezing base 65 can cope with different degrees of freezing extrusion, so that the anti-freezing performance of the optical cable can be targeted to achieve, that is, the optical cable can show a stepped buffering effect to the external force, so that the optical cable can meet the anti-freezing requirements in a variety of environmental conditions.

In an embodiment of the present invention, the anti-freezing base 65 is made of flexible resin, and the capsules A and the capsules B are solidified on an outer side of the energy storage insulation layer 63 by the flexible resin. Its porous structure has high energy absorption rate, good compressive buffer effect, and high rebound rate after compression, and is not easy to produce plastic deformation after long-term repeated use, thereby effectively protecting the transmission unit inside the optical cable. In addition, the flexible resin also has the advantages of low density, cold insulation, heat insulation, low heat conductivity and stability, and its main performance indicators are as follows: apparent density 80kg/m$^3$-110kg/m$^3$, compression rebound rate≥85%, elongation at break≥80%, and tear strength≥85KN/m.

In an embodiment of the present invention, the elastic modulus of capsule A is the same as the elastic modulus of capsule B, and the elastic modulus $\beta$ of capsule A has the following relationship with the elastic modulus $\alpha$ of the anti-freezing base 65: $\beta \geq 10*\alpha$.

In another embodiment of the present invention, the anti-freezing base 65 can also be selected from a porous structural material with excellent properties such as silicone rubber foam tube, nitrile rubber foam tube, EPDM rubber foam tube or natural rubber foam tube.

In an embodiment of the present invention, the flexible resin used in the anti-freezing base 65 has an elastic modulus of 4MPa.

In embodiments of the present invention, a thickness of the anti-freezing layer 64 has a range as follows:

$$r \geq \frac{D_0 + \sigma_{\max}}{2*\varepsilon} \left( \sqrt{\frac{\rho_{\text{water}}}{\rho_{\text{ice}}}} - 1 \right) \quad r \geq \frac{D_0 + \sigma_{\max}}{2} \left( \sqrt{\frac{\rho_{\text{water}}}{\rho_{\text{ice}}}} - 1 \right).$$

Where $D_0$ is an overall outer diameter of the optical cable, $\sigma_{max}$ is a maximum thickness of an ice layer outside the optical cable, $\rho_{water}$ is a density of water at 0°C, $\rho_{ice}$ is a density of ice at 0°C, and $\varepsilon$ is a deformation coefficient of the anti-freezing layer 64.

It should be noted that a thickness of the anti-freezing base 65 is the same as a thickness of the anti-freezing layer 64.

It should be noted that in the actual laying process, the periphery of the optical cable is provided with a protective tube, and an ice layer is generated between the outer wall of the optical cable and the inner wall of the protective tube; and the ice layer squeezes the optical cable to cause damage to the optical fibers inside the optical cable. Therefore, the maximum thickness $\sigma_{max}$ of the ice layer outside the optical cable can also be calculated according to $D_1$-$D_0$, where $D_1$ is the inner diameter of the protective tube, and a thickness r of the above anti-freezing layer 64 has a range expressed as:

$$r \geq \frac{D_1}{2*\varepsilon} \left( \sqrt{\frac{\rho_{water}}{\rho_{ice}}} - 1 \right).$$

In the above-mentioned technical solution, the buffer limit value of the anti-freezing base 65 is related to the outer diameter of the entire optical cable and the thickness of the ice layer. That is, when the radial deformation degree $\eta$ of one side of the optical cable (that is, with any diameter of the optical cable as the central axis, either side of the central axis) is greater than or equal to the thickness r of the anti-freezing layer 64, the external pressure reaches the buffer limit value of the anti-freezing base 65, and the capsule A and the capsule B begin to break and react to form foamed polyurethane.

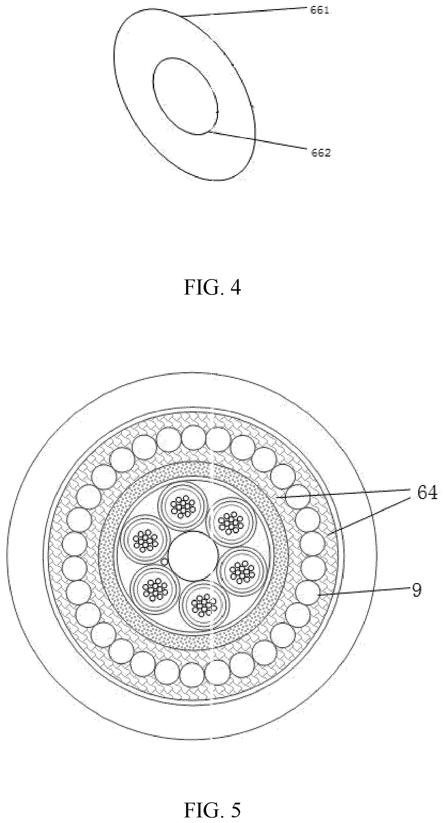

As shown in FIGS. 3 and 4, in embodiments according to the claimed invention, the first capsule body and the second capsule body both include a first protective layer 661 and a second protective layer 662 disposed within the first protective layer 661, and the elastic modulus of the second protective layer 662 is greater than the elastic modulus of the first protective layer 661.

In the above-mentioned technical solution, the second protective layer 662 is internally provided with a reactant (i.e., the first reactant or the second reactant as described above), and a plurality of effusion-holes 663 are provided in the second protective layer 662.

Through the above-mentioned settings, when the capsules A and the capsules B are pressed by the external force, the first protective layer 661 breaks, and the reactant effuses out from the effusion-hole 663 to perform a polyaddition reaction and generate polyurethane. When the polyurethane generated is sufficient to block off the effusion-hole 663, and the reactant will not continue to effuse out; and when the next squeezing occurs, the reactant will seep out again. It this way, it can improve the utilization rate of reactant, prevent the problem of the failure of the anti-freezing layer 64 caused by all the reactants seeping out after one extrusion, so that the anti-freezing layer 64 can resist external pressure for many times. Setting the second protective layer 662, on the one hand, ensures that the capsule A and the capsule B do not break when the external pressure does not reach the buffer limit value of anti-freezing base 65; on the other hand, after the reaction of the first reactant and the second reactant ends, the second protective layer 662 can restore its original form to a certain extent and hold the remaining reaction liquid to prevent the loss of the reactant.

In an embodiment of the present invention, the number of the effusion-hole 663 is$\geq$4, and the typical size of the first capsule body and/or the second capsule body is less than or equal to 1/2 r_min*r_min, where r_min is a minimum of the thickness r of the anti-freezing layer 64, namely:

$$r \geq \frac{D_0+\sigma_{max}}{2*\varepsilon} \left( \sqrt{\frac{\rho_{water}}{\rho_{ice}}} - 1 \right) \quad r \geq \frac{D_0+\sigma_{max}}{2} \left( \sqrt{\frac{\rho_{water}}{\rho_{ice}}} - 1 \right).$$

In this way, the capsules A and the capsules B in the anti-freezing base 65 can be disposed in two layers along the radial direction. When the capsule A and the capsule B are broken, the polyaddition reaction triggered by the first reactant and the second reactant is performed faster and more thorough.

In another embodiment of the present invention, the capsules A and the capsules B in the anti-freezing base 65 are provided in at least one layer in the radial direction.

In an embodiment of the present invention, the first protective layer 661 may be made of a material that is easy to break and has stable properties, such as a polyurea resin; and the second protective layer 662 is formed by spraying a material with strength and elastic modulus greater than the first protective layer 661, such as neoprene rubber.

In another embodiment of the present invention, only one of the first capsule body and the second capsule body may be provided with the above structure, and the other of the first capsule body and the second capsule body may be provided with only one protective shell.

As shown in FIG. 4, in another embodiment of the present invention, in the first capsule body and the second capsule, a reactant is provided in a cavity enclosed by the second protective layer 662 and in a gap formed between the first protective layer 661 and the second protective layer 662. That is, the first capsule body and the second capsule body are both nested structures, and the first protective layer 661 and the second protective layer 662 break under different external forces, showing a stepwise rupture to the external force. When the first protective layer 661 breaks, the reactant in the gap between the first protective layer 661 and the second protective layer 662 overflows, and when the second protective layer 662 breaks, the reactant in the cavity enclosed by the second protective layer 662 overflows.

As shown in FIG. 1, in embodiments of the present invention, the anti-freezing fire-resistant and rat-proof optical cable also includes at least two glass-fiber-reinforced plastic rods disposed inside the anti-freezing layer 64 at intervals along a circumferential direction, which divide the interior of the anti-freezing layer 64 into at least two separate spaces.

In the above-mentioned technical solutions, the glass-fiber-reinforced plastic rods are three in number, and the adjacent two glass-fiber-reinforced plastic rods are separated apart by 120° in the circumferential direction to divide the anti-freezing layer 64 into three separate spaces. The above glass-fiber-reinforced plastic rod is the same as the glass-fiber-reinforced plastic rod inside the armor layer 9. Part of the glass-fiber-reinforced plastic rods inside the armor layer 9 can be moved radially inward to the inside of the anti-freezing layer 64, which is equivalent to alternate arrangement of the armor layer 9 and the anti-freezing layer 64.

Through the above setting, when the capsule A and the capsule B are broken, the first reactant and the second reactant will not be gathered entirely to the lower part of the optical cable due to gravity, so as to avoid the problem of the loss of foamed polyurethane in the upper part of the optical cable, thereby ensuring that there is sufficient amount of the first reactant and the second reactant to participate in the reaction in each separate space, ensuring the uniformity of reactant in the optical cable, and ensuring that the polyurethane produced by the reaction can adequately fill the entire interior of the anti-freezing layer. At the same time, the position of the glass-fiber-reinforced plastic rod disposed in the anti-freezing layer 64 corresponding to the position of the armor layer 9 can be filled with the capsule A and the capsule B, so that, on the one hand, this can avoid the missing of armor layer 9 structure, ensure the roundness of the optical cable, and not affect the rat-proof performance of the optical cable; on the other hand, this can ensure sufficient amount of the capsule A and the capsule B, thereby reacting to generate sufficient amount of polyurethane.

In an embodiment of the present invention, the anti-freezing, fire-resistant and rat-proof optical cable also includes a flame-retardant structure disposed in the anti-freezing layer 64.

In the above-mentioned technical solution, the flame-retardant structure is a capsule C filled with a flame retardant (not shown in the figure), and the component of flame retardant may be halogenated phosphates and phosphates, such as tri(2-chloroethyl) phosphate, tri(2-chloropropyl) phosphate, dimethyl methyl phosphate, etc.

In another embodiment of the present invention, the flame-retardant structure may also be a flame-retardant layer embedded inside the anti-freezing layer 64, and the flame-retardant layer may be made of a flame-retardant cloth or the flame retardant as described above.

In an embodiment of the present invention, the anti-freezing, fire-resistant and rat-proof optical cable also includes a rat-proof structure disposed in the anti-freezing layer 64.

In the above-mentioned technical solutions, the rat-proof structure is a capsule D filled with a rat-proof agent (not shown in the figure), and the component of the rat-proof agent is capsaicin or iminocyclohexanone in ethanol and so on.

In another embodiment of the present invention, the rat-proof structure may also be a rat-proof layer embedded inside the anti-freezing layer 64, where the rat-proof layer is made of the rat-proof agent as described above.

In the embodiment of the present invention, the non-metallic glass-fiber-reinforced plastic rod is disposed outside the anti-freezing layer 64 by means of resin solidification. Compared with the twisting manner, on the one hand, the resin solidification manner can enhance the strength of the armor layer of the non-metallic fiber rod, and reduce the problem of the deformation of the anti-freezing layer 64 and the uneven cross section of the optical cable caused by the transverse extrusion pressure in the twisting process; on the other hand, by using the resin solidification method, the non-metallic glass fiber rod has less extrusion pressure on the anti-freezing layer 64, which can avoid the problem of triggering the polyaddition reaction of the anti-freezing layer 64 due to excessive extrusion pressure in the process of producing the armor layer 9, thereby ensuring the overall performance of the anti-freezing layer 64.

In an embodiment of the present invention, the non-metallic glass-fiber-reinforced plastic rod has a tensile strength of not less than 1450MPa, an elastic modulus of not less than 55GPa, a bending strength of not less than 1100MPa, a diameter deviation of $\pm0.02$mm, a density range of 2.05g/cm$^3$ to 2.15g/cm$^3$, and a uniform color; and its surface should have no cracks and no burrs, and have smooth hand-feeling. Its outer diameter shall be selected according to the required force value of the laying environment and the rat-proof level.

In another embodiment of the present invention, the armor layer 9 may also formed of materials such as non-metallic glass fiber woven tape and non-metallic glass fiber yarn that can stimulate the mouth of rodents.

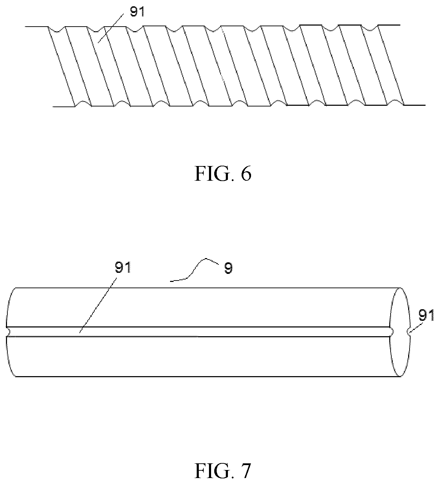

As shown in FIG. 6, in embodiments of the present invention, is also provided on the non-metallic glass-fiber-reinforced plastic rod is also provided with a rat-repelling structure, where the rat-repelling structure includes at least one accommodating groove 91 disposed in the non-metallic glass-fiber-reinforced plastic rod, and a rat-repelling drug powder located in the accommodating groove 91.

In the above-mentioned technical solutions, the accommodating groove 91 is one, and the accommodating groove 91 spirally surrounds an outer wall of the non-metallic glass-fiber-reinforced plastic rod. A pitch of the accommodating groove 91 is≥10mm, the transverse section of the accommodating groove 91 is in a curved or square shape, and the maximum depth H and maximum width W of the accommodating groove 91 are each greater than or equal to one-tenth of the diameter of the non-metallic glass-fiber-reinforced plastic rod. The rat-repelling drug powder is a bishydroxycoumarin-type anticoagulant, and its main function is to inhibit the metabolism of vitamin K in the body, resulting in the dysfunction of the anticoagulant function of rats to achieve the rat-proof purpose; at the same time, the addition of capsaicin achieves a stronger repelling effect. The accommodating groove 91 is also provided with an adhesive coating therein, so as to increase the drug load in the accommodating groove 91.

Through the above-mentioned settings, without increasing the structure and outer diameter of the optical cable, the armor layer 9 has both physical rat-proof and chemical rat-proof functions, thereby improving the rat-proof and repelling effects.

As shown in FIG. 7, in another embodiment of the present invention, the accommodating grooves 91 are at least two in number, where at least two accommodating grooves 91 are disposed at intervals around the circumference of the non-metallic glass-fiber-reinforced plastic rod, and each accommodating groove 91 extends axially along the non-metallic glass-fiber-reinforced plastic rod.

As shown in FIG. 5, in another embodiment of the present invention, the armor layer 9 may also be compounded into the interior of the anti-freezing layer 64. For example, when the armor layer 9 is made of the non-metallic glass fiber yarn, the non-metallic glass fiber yarn can be compounded with foamed polyurethane capsules, further reducing the outer diameter of the optical cable, while making the anti-freezing layer more sensitive to the external force.

In embodiments of the present invention, the fire-resistant layer 3 is made of ceramicized flame-retardant polyolefin.

In the above-mentioned technical solutions, the fire-resistant layer 3 is preferably selected from ceramicized polymer composite material, which is a new type of fire-proof and fire-resistant material and is a special composite material made by using the polymer as substrate, adding a ceramic filler, a flux, a flame retardant and other additives and processing. Compared with traditional high polymer materials, it can prevent the fire-resistant layer 3 from incineration and falling off in the flame or high temperature environment. This material can maintain the mechanical properties and processing properties of general high polymer materials at normal temperature, and can quickly form a compact and hard ceramic body in the flame or high temperature environment, so as to play the roles of flame retarding, fire resistance and ablation resistance. The fire-resistant layer 3 and the loose sleeve are disposed by a double-layer co-extruding manner, or the fire-resistant layer 3 is extruded separately at a periphery of the loose sleeve of the optical unit.

The ceramicized flame retardant polyolefin is extruded outside each optical unit, forming a plurality of small-size fire-resistant units to provide a stable combustion environment and space for the optical fibers inside the optical unit, which can ensure that the internal space of the optical unit will not collapse due to cooling shrinkage during the cease-fire stage of the optical cable, thus effectively reducing the risk of optical fiber breakage.

In another embodiment of the present invention, the fire-resistant layer 3 may also be formed by a non-metallic fire-resistant tape, which may be selected from the non-metallic fire-resistant materials that have better fire resistance, such as ceramicized fire-resistant tape, polyimide film and mica tape.

As shown in FIG. 1, in embodiments of the present invention, the anti-freezing, fire-resistant and rat-proof optical cable also includes a first water-blocking layer 61 disposed between the cable core and the energy storage insulation layer 63, and a second water-blocking layer 62 disposed between the armor layer 9 and the outer sheath 10.

In the above-mentioned technical solutions, the first water-blocking layer 61 and the second water-blocking layer 62 are formed by a water-blocking tape with excellent properties, in which the water-blocking tape is formed by compounding sodium polyacrylate and nonwoven base tape, and has the advantages of fast expansion, good gel stability, good thermal stability, good compatibility with other materials of optical cable, oxidation resistance and so on. The typical indicators of the water-blocking tape include: tensile strength≥40N/cm, elongation at break≥12%, expansion rate≥10mm/min, and expansion height≥12mm; and its setting manner can be surrounded wrapping or longitudinal wrapping. The second water-blocking layer 62 is provided outside the armor layer 9 to form a closed internal space, which can avoid the scattering of the rat-repelling drug powder from the accommodating groove 91, extend the use time of the rat-repelling drug powder, and avoid the problem of the failure of rat-repelling drug powder due to the entry of water vapor.

In embodiments of the present invention, the loose sleeve of the optical unit is formed by extruding polybutanediol terephthalate (PBT), and has a density range of $1.25g/cm^3$ to $1.35g/cm^3$, a Shore hardness HD of not less than 70, a tensile elastic modulus of not less than 2100MPa, a bending elastic modulus of not less than 2200MPa, and an axial shrinkage≤±0.5%. The optical unit contains a certain number of colored optical fibers and water-blocking substances, where the optical fiber is G.652D optical fiber, the diameter of the coating layer ranges from $245\mu m$ to $255\mu m$, the number of optical fibers ranges from 2 to 24 cores, and the colors of the optical fibers include but are not limited to blue, orange, green, brown, gray, white, red, black, yellow, purple, pink, and dark green. More than 12 cores of optical fiber can be wrapped with different colors of yarns or colored-rings for identification; the optical fibers with different colored-rings can be identified by single and double colored-ring units or colored-ring spacing.

In another embodiment of the present invention, the type of optical fiber may be selected from G.652, G.655, G657A1, G657A2, and G654E; the optical fiber may be small size optical fiber with the coating layer diameter of $(180\mu m-200\mu m)\pm10\mu m$; the loose sleeve 2 may also be a tight sleeve optical fiber structure, and the core number of optical unit may be 4-core, 6-core, 12-core, 24-core, or 36-core; and the wall thickness of the loose sleeve may be (0.30mm -0.40mm)$\pm$0.05mm.

In the embodiment of the present invention, a central stiffener 5 is a non-metallic fiber reinforced plastic rod with a tensile strength not less than 1450MPa, an elastic modulus not less than 55GPa, a bending strength not less than 1100MPa, a diameter deviation $\pm$0.02mm, a density range of 2.05-2.15g/cm$^3$, an uniform color, and a surface free of cracks and burrs and having a smooth hand-feeling.

In another embodiment of the present invention, the central stiffener 5 is selected from a non-metallic fiber reinforced plastic rod, such as a glass-fiber-reinforced plastic rod, an aramid fiber reinforced plastic rod, and a carbon fiber reinforced plastic rod. In embodiments of the present invention, the water-blocking material 4 is selected from the water-blocking yarn, in which the water blocking yarn is made of water absorbing and expanding materials, or is formed by compounding expansion powder of cross-linked polyacrylates or made of suitable water absorbing materials. The specifications and number of water-blocking yarn can be selected according to the usage requirements of optical cable, and may be placed in a straight or winding manner, etc. The typical indicators of water-blocking yarn of the present invention are as follows: a tensile strength not less than 250N, an elongation at break not less than 15%, an expansion speed not less than 60ml/g/min, an expansion rate not less than 65ml/g, and a water content not more than 9%.

In another embodiment of the present invention, the water-blocking material 4 may be replaced by a high-performance water-blocking material such as a water-blocking ointment, etc.

In embodiments of the present invention, the outer sheath 10 adopts high-performance low-smoke halogen-free fire-retardant polyolefin material, and the typical indicators of the sheath material are as follows: a density 1.52 $\pm$ 0.02g/cm$^3$, a tensile strength$\geq$13.0MPa, an elongation at break$\geq$180%, an oxygen index not less than 36%, a maximum specific optical density at flame combustion not more than 60, a Shore hardness HA$\geq$80, and the wall thickness of the optical cable sheath ranging from 1.5mm to 2.5mm.

In another embodiment of the present invention, the material of the outer sheath 10 can also be selected polyethylene, polypropylene, polyvinyl chloride, nylon, ceramicized flame-retardant polyolefin and other high-performance sheath materials, and the wall thickness of the inner sheath and the outer sheath 10 can be adjusted according to the optical cable laying environment, with a typical value of 0.5mm-2.5mm.

In embodiments of the present invention, the outer diameter of the overall optical cable is 26.8$\pm$0.04mm and the weight of the optical cable is 480kg/km. The optical cable as a whole adopts a layered twisting and filling structure to meet the longitudinal water-blocking of the cable core (that is, a water penetration test is carried out for the optical cable, and under the test conditions of a water column height of 1m, an optical cable specimen length of 3m and a test time of 24h, the water penetration length of the cable core is less than or equal to 1.5m, that is, the cable core can meet the longitudinal water-blocking).

In an embodiment of the present invention, the cable core includes 6 optical units, and each optical unit includes 12 optical fibers, where the outer diameter of the loose sleeve is 1.6mm$\pm$0.05mm and the thickness of the loose sleeve is 0.35mm$\pm$0.05mm; a layer of ceramicized flame-retardant polyolefin with a wall thickness of 0.2$\pm$0.05mm is extruded outside the optical unit to form the fire-resistant layer 3, its outer diameter being 2.0$\pm$0.05mm. The outer diameter of the central stiffener is 2.0$\pm$0.05mm, and a plurality of optical units are twisted at the periphery of the central stiffener 5 to form the cable core. A layer of water-blocking tape with a thickness of 0.2mm* a width of 20mm is covered outside the cable core. One energy storage insulation layer 63 with a wall thickness of 0.6$\pm$0.05mm is extruded outside the first water-blocking layer 61. The anti-freezing layer 64 is disposed outside the energy storage insulation layer 63. The anti-freezing layer 64 is formed by compounding the anti-freezing base 65, the capsules A and the capsules B. The anti-freezing layer has a thickness of 4.0$\pm$0.5mm, and the anti-freezing layer has an outer diameter of 15.6$\pm$0.4mm. Non-metal glass fiber rods are disposed outside the anti-freezing layer to form the armor layer 9, where 46 FRPs (non-metallic glass-fiber-reinforced plastic rods) with an outer diameter of 1.4 $\pm$ 0.05mm are uniformly and densely wrapped around the periphery of the anti-freezing layer 64, and the FRPs (non-metal glass-fiber-reinforced plastic rods) are solidified on the surface of the anti-freezing layer by using resin in a straight manner. The armor layer 9 is wrapped with one layer of the water-blocking tape with a thickness of 0.2mm* a width of 52mm, and finally, one layer of low-smoke halogen-free fire-retardant polyolefin with a wall thickness of 2.0$\pm$0.05mm is extruded to form the outer sheath 10.

From the above description, it can be seen that the above-mentioned embodiments of the present invention achieve the following technical effects. The capsule A and the capsule B are provided. Under freezing environment (that is, when the external temperature is less than 0°C), the condensed ice layer on an outer wall of the optical cable imposes radial pressure on the optical cable, and the capsule A and the capsule B break and generate polyaddition reaction. The heat energy generated by the reaction can increase the internal temperature of the optical cable, avoiding the decrease of the internal temperature of the optical cable with the decrease of the external temperature. **In** this way, it is possible to maintain relatively stable temperature environment in an interior of the optical cable, and slowly reduce the temperature, thereby avoiding the problem of increased loss of the optical signal transmission caused by the decrease in temperature. At the same time, by providing the energy storage insulation layer which can absorb heat energy and store the heat energy inside it, on the one hand, when the external environment temperature drops sharply, the energy storage insulation layer can absorb and store the heat energy released by the chemical reaction to avoid the internal temperature of the optical cable dropping sharply with the external temperature; on the other hand, when the external environment temperature rises sharply, the energy storage insulation layer can also store the heat energy transmitted by the external environment to avoid excessive internal temperature of the optical cable. In this way, the energy storage insulation layer can play the role of heat buffering and internal temperature regulation, thereby ensuring the stability of the internal temperature of the optical cable, and avoiding the problem of unstable optical signal transmission caused by the sudden rise or drop of the internal temperature of the optical cable. The fire-resistant layer, the energy storage insulation layer, the anti-freezing layer and the armor layer work together, and the optical cable has the functions of anti-freezing, fire-resistance and rat-proofing. When freezing, fire or rat biting occurs, the internal optical fiber can be protected from damage, so as to ensure the normal operation of the optical cable, improve the reliability and stability of the optical cable operation, and extend the service life of the optical cable.

## Claims

1. An anti-freezing, fire-resistant and rat-proof optical cable, comprising a cable core, an energy storage insulation layer (63), an anti-freezing layer (64), an armor layer (9) and an outer sheath (10) which are sequentially disposed from inside to outside;

   the cable core comprises a plurality of optical units disposed in a circumferential direction, and a periphery of each optical unit is provided with a fire-resistant layer (3), the armor layer (9) comprises a plurality of glass-fiber-reinforced plastic rods disposed in a circumferential direction, and the plurality of glass-fiber-reinforced plastic rods are disposed on an inner side of the outer sheath (10);
   **characterized in that** the anti-freezing layer (64) comprises an anti-freezing base (65) and a capsule A and a capsule B disposed circumferentially inside the anti-freezing base (65), the capsule A and the capsule B are constructed to be capable of undergoing chemical reaction and releasing heat under a preset condition, and the energy storage insulation layer (63) is constructed to be capable of storing heat energy;
   wherein the capsule A and the capsule B are identical in number, the capsule A comprises a first capsule body and a first reactant disposed in the first capsule body, and the first reactant comprises polyester polyol, water-soluble silicone oil and distilled water;
   the capsule B comprises a second capsule body and a second reactant disposed in the second capsule body, and the second reactant comprises diphenylmethane diisocyanate, triethylene diamine and dibutyltin dilaurate, wherein a mass ratio of polyester polyol to diphenylmethane diisocyanate ranges from 1.6 to 3.33;
   wherein at least one of the first capsule body and the second capsule body comprises a first protective layer (661) and a second protective layer (662) disposed in the first protective layer (661), and an elastic modulus of the second protective layer (662) is greater than an elastic modulus of the first protective layer (661).

2. The anti-freezing, fire-resistant and rat-proof optical cable according to claim 1, wherein the energy storage insulation layer (63) comprises a plurality of phase-transition energy storage capsules disposed along a circumferential direction, and a phase-transition material is provided inside the phase-transition energy storage capsules to enable the phase-transition energy storage capsules to collect and store heat when an external temperature rises, and release heat when the external temperature drops or is constant.

3. The anti-freezing, fire-resistant and rat-proof optical cable according to claim 1, wherein a reactant is provided in the second protective layer (662), and the second protective layer (662) is provided with a plurality of effusion-holes (663).

4. The anti-freezing, fire-resistant and rat-proof optical cable according to claim 1, wherein a reactant is provided in a cavity enclosed by the second protective layer (662) and in a gap formed between the first protective layer (661) and the second protective layer (662).

5. The anti-freezing, fire-resistant and rat-proof optical cable according to any one of claims 1-4, wherein the anti-freezing, fire-resistant and rat-proof optical cable further comprises at least two glass-fiber-reinforced plastic rods disposed circumferentially inside the anti-freezing layer (64) at intervals, and the at least two glass-fiber-reinforced plastic rods divide an interior of the anti-freezing layer (64) into at least two separate spaces.

6. The anti-freezing, fire-resistant and rat-proof optical cable according to any one of claims 1-4, wherein the anti-freezing base (65) is capable of undergoing elastic deformation under freezing environment, and an elastic modulus of capsule body of the capsule A is greater than an elastic modulus of the anti-freezing base (65), and an elastic modulus of capsule body of the capsule B is greater than an elastic modulus of the anti-freezing base (65).

7. The anti-freezing, fire-resistant and rat-proof optical cable according to any one of claims 1-4, wherein the anti-freezing layer (64) is constructed to be capable of having a buffer function under the preset condition, and the preset condition is that: a radial deformation degree $\eta$ of a side of the optical cable is greater than or equal to a thickness r of the anti-freezing layer (64).

8. The anti-freezing, fire-resistant and rat-proof optical cable according to claim 7, wherein a thickness of the anti-freezing layer (64) has a range expressed as:

$$r \geq \frac{D_0 + \sigma_{\max}}{2*\varepsilon} \left( \sqrt{\frac{\rho_{\text{water}}}{\rho_{\text{ice}}}} - 1 \right),$$

wherein $D_0$ is an overall outer diameter of the optical cable, $\sigma_{\max}$ is a maximum thickness of an ice layer outside the optical cable, $\rho_{\text{water}}$ is a density of water at 0°C, $\rho_{\text{ice}}$ is a density of ice at 0°C, and $\varepsilon$ is a deformation coefficient of the anti-freezing layer (64).

9. The anti-freezing, fire-resistant and rat-proof optical cable according to any one of claims 1-4, wherein the anti-freezing, fire-resistant and rat-proof optical cable further comprises a flame-retardant structure disposed in the anti-freezing layer (64); and/or,
the anti-freezing, fire-resistant and rat-proof optical cable also comprises a rat-proof structure disposed in the anti-freezing layer (64).

10. The anti-freezing, fire-resistant and rat-proof optical cable according to any one of claims 1-4, wherein each glass-fiber-reinforced plastic rod is also provided with a rat-repelling structure.

11. The anti-freezing, fire-resistant and rat-proof optical cable according to claim 10, wherein the rat-repelling structure is at least one accommodating groove (91) disposed in the each glass-fiber-reinforced plastic rod, and a rat-repelling drug powder located in the accommodating groove (91).

12. The anti-freezing, fire-resistant and rat-proof optical cable according to claim 11, wherein the accommodating groove (91) is one in number, and the accommodating groove (91) spirally surrounds an outer wall of the each glass-fiber-reinforced plastic rod; or, the accommodating groove (91) is at least two in number, and the at least two accommodating grooves (91) are arranged circumferentially around the glass-fiber-reinforced plastic rod at intervals, and each accommodating groove (91) extends along an axial direction of the glass-fiber-reinforced plastic rod.

13. The anti-freezing, fire-resistant and rat-proof optical cable according to any one of claims 1-4, wherein the anti-freezing, fire-resistant and rat-proof optical cable further comprises a first water-blocking layer (61) disposed between the cable core and the energy storage insulation layer (63), and a second water-blocking layer (62) disposed between the armor layer (9) and the outer sheath (10); and/or,
the fire-resistant layer (3) is made of ceramicized flame retardant polyolefin.

**Patentansprüche**

1. Gefriergeschütztes, feuerfestes und rattengeschütztes optisches Kabel, das eine Kabelseele, eine energiespeichernde Isolierschicht (63), eine gefriergeschützte Schicht (64), eine Panzerschicht (9) und eine äußere Umhüllung (10) umfasst, die von innen nach außen aufeinanderfolgend angeordnet sind;

wobei die Kabelseele eine Vielzahl von optischen Einheiten umfasst, die in einer Umfangsrichtung angeordnet sind, und eine Peripherie jeder optischen Einheit mit einer feuerfesten Schicht (3) versehen ist, wobei die Panzerschicht (9) eine Vielzahl von glasfaserverstärkten Kunststoffstäben umfasst, die in einer Umfangsrichtung angeordnet sind, und die Vielzahl von glasfaserverstärkten Kunststoffstäben auf einer Innenseite des Außenmantels (10) angeordnet ist,
**dadurch gekennzeichnet, dass** die Gefrierschutzschicht (64) eine Gefrierschutzbasis (65) und eine Kapsel A und eine Kapsel B umfasst, die in Umfangsrichtung innerhalb der Gefrierschutzbasis (65) angeordnet sind, die Kapsel A und die Kapsel B so konstruiert sind, dass sie in der Lage sind, eine chemische Reaktion einzugehen und unter einer vorgegebenen Bedingung Wärme freizusetzen, und die energiespeichernde Isolierschicht (63) so konstruiert ist, dass sie in der Lage ist, Wärmeenergie zu speichern;
wobei die Kapsel A und die Kapsel B in ihrer Anzahl identisch sind, die Kapsel A einen ersten Kapselkörper und einen ersten Reaktanten umfasst, der in dem ersten Kapselkörper angeordnet ist, und der erste Reaktant Polyesterpolyol, wasserlösliches Silikonöl und destilliertes Wasser umfasst;
die Kapsel B einen zweiten Kapselkörper und einen in dem zweiten Kapselkörper angeordneten zweiten Reaktanten umfasst, und der zweite Reaktant Diphenylmethandiisocyanat, Triethylendiamin und Dibutylzinndilaurat umfasst, wobei ein Massenverhältnis von Polyesterpolyol zu Diphenylmethandiisocyanat im Bereich von 1,6 bis 3,33 liegt;
wobei mindestens einer von dem ersten Kapselkörper und dem zweiten Kapselkörper eine erste Schutzschicht (661) und eine zweite Schutzschicht (662) umfasst, die in der ersten Schutzschicht (661) angeordnet ist, und ein Elastizitätsmodul der zweiten Schutzschicht (662) größer ist als ein Elastizitätsmodul der ersten Schutzschicht (661).

2. Gefriergeschütztes, feuerfestes und rattengeschütztes optisches Kabel nach Anspruch 1, wobei die energiespeichernde Isolierschicht (63) eine Vielzahl von Phasenübergangs-Energiespeicherkapseln umfasst, die entlang einer Umfangsrichtung angeordnet sind, und ein Phasenübergangsmaterial im Inneren der Phasenübergangs-Energiespeicherkapseln vorgesehen ist, um die Phasenübergangs-Energiespeicherkapseln in die Lage zu versetzen, Wärme zu sammeln und zu speichern, wenn eine Außentemperatur steigt, und Wärme abzugeben, wenn die Außentemperatur fällt oder konstant ist.

3. Gefriergeschütztes, feuerfestes und rattengeschütztes optisches Kabel nach Anspruch 1, wobei ein Reaktionsmittel in der zweiten Schutzschicht (662) vorgesehen ist, und die zweite Schutzschicht (662) mit einer Vielzahl von Effusionslöchern (663) versehen ist.

4. Gefriergeschütztes, feuerfestes und rattengeschütztes optisches Kabel nach Anspruch 1, wobei in einem von der zweiten Schutzschicht (662) umschlossenen Hohlraum und in einem zwischen der ersten Schutzschicht (661) und der zweiten Schutzschicht (662) gebildeten Spalt ein Reaktionsmittel vorgesehen ist.

5. Gefriergeschütztes, feuerfestes und rattengeschütztes optisches Kabel nach einem der Ansprüche 1 bis 4, wobei das gefriergeschützte, feuerfeste und rattengeschützte optische Kabel ferner mindestens zwei glasfaserverstärkte Kunststoffstäbe aufweist, die in Umfangsrichtung in Abständen innerhalb der Gefrierschutzschicht (64) angeordnet sind, und die mindestens zwei glasfaserverstärkten Kunststoffstäbe einen Innenraum der Gefrierschutzschicht (64) in mindestens zwei getrennte Räume unterteilen.

6. Gefriergeschütztes, feuerfestes und rattengeschütztes optisches Kabel nach einem der Ansprüche 1 bis 4, wobei die Gefrierschutzbasis (65) in der Lage ist, sich unter Gefrierbedingungen elastisch zu verformen, und ein Elastizitätsmodul des Kapselkörpers der Kapsel A größer ist als ein Elastizitätsmodul der Gefrierschutzbasis (65), und ein Elastizitätsmodul des Kapselkörpers der Kapsel B größer ist als ein Elastizitätsmodul der Gefrierschutzbasis (65).

7. Gefriergeschütztes, feuerfestes und rattengeschütztes optisches Kabel nach einem der Ansprüche 1 bis 4, wobei die Gefrierschutzbasis (64) so konstruiert ist, dass sie in der Lage ist, unter der vorgegebenen Bedingung eine Pufferfunktion aufzuweisen, und die vorgegebene Bedingung ist, dass: ein radialer Verformungsgrad TJ einer Seite des optischen Kabels größer als oder gleich einer Dicke r der Gefrierschutzbasis (64) ist.

8. Gefriergeschütztes, feuerfestes und rattengeschütztes optisches Kabel nach Anspruch 7, wobei eine Dicke der Gefrierschutzbasis (64) einen Bereich hat, der ausgedrückt wird als:

$$r \geq \frac{D_0 + \sigma_{max}}{2 \cdot \varepsilon} \left( \sqrt{\frac{\rho_{water}}{\rho_{ice}}} - 1 \right),$$

wobei $D_O$ ein Gesamtaußendurchmesser des optischen Kabels ist, $\sigma_{max}$ eine maximale Dicke einer Eisschicht außerhalb des optischen Kabels ist, $\rho_{water}$ eine Dichte von Wasser bei 0°C ist, $\rho_{ice}$ eine Dichte von Eis bei 0°C ist, und $\epsilon$ ein Verformungskoeffizient der Gefrierschutzschicht (64) ist.

9. Gefriergeschütztes, feuerfestes und rattengeschütztes optisches Kabel nach einem der Ansprüche 1 bis 4, wobei das gefriergeschützte, feuerfeste und rattengeschützte optische Kabel ferner eine flammhemmende Struktur aufweist, die in der Gefrierschutzbasis (64) angeordnet ist; und/oder, das gefriergeschützte, feuerfeste und rattengeschützte optische Kabel auch eine rattengeschützte Struktur umfasst, die in der Gefrierschutzbasis (64) angeordnet ist.

10. Gefriergeschütztes, feuerfestes und rattengeschütztes optisches Kabel nach einem der Ansprüche 1 bis 4, wobei jeder glasfaserverstärkte Kunststoffstab zusätzlich mit einer rattenabweisenden Struktur versehen ist.

11. Gefriergeschütztes, feuerfestes und rattengeschütztes optisches Kabel nach Anspruch 10, wobei die rattenabweisende Struktur mindestens eine in dem jeweiligen glasfaserverstärkten Kunststoffstab angeordnete Aufnahmerille (91) und ein in der Aufnahmerille (91) befindliches rattenabweisendes Arzneimittelpulver ist.

12. Gefriergeschütztes, feuerfestes und rattengeschütztes optisches Kabel nach Anspruch 11, wobei die Aufnahmerille (91) eine einzige ist, und die Aufnahmerille (91) spiralförmig eine Außenwand des jeweiligen glasfaserverstärkten Kunststoffstabes umgibt; oder, die Aufnahmerille (91) in einer Anzahl von mindestens zwei vorliegt, und die mindestens zwei Aufnahmerillen (91) in Umfangsrichtung in Abständen um den glasfaserverstärkten Kunststoffstab angeordnet sind, und jede Aufnahmerille (91) sich entlang einer axialen Richtung des glasfaserverstärkten Kunststoffstabes erstreckt.

13. Gefriergeschütztes, feuerfestes und rattengeschütztes optisches Kabel nach einem der Ansprüche 1 bis 4, wobei das gefriergeschützte, feuerfeste und rattengeschützte optische Kabel ferner eine erste wasserblockierende Schicht (61) aufweist, die zwischen der Kabelseele und der energiespeichernden Isolierschicht (63) angeordnet ist, und eine zweite wasserblockierende Schicht (62) aufweist, die zwischen der Panzerschicht (9) und dem Außenmantel (10) angeordnet ist; und/oder, die feuerfeste Schicht (3) aus keramisch flammhemmendem Polyolefin besteht.

## Revendications

1. Câble optique résistant au gel, au feu, et aux rats, comprenant une âme de câble, une couche d'isolation à stockage d'énergie (63), une couche résistante au gel (64), une couche d'armure (9), et une gaine extérieure (10) qui sont disposées séquentiellement, de l'intérieur à l'extérieur ;

   l'âme de câble comprend une pluralité d'unités optiques disposées dans une direction circonférentielle, et une périphérie de chaque unité optique est pourvue d'une couche résistante au feu (3), la couche d'armure (9) comprend une pluralité de tiges en plastique renforcé de fibres de verre disposées dans une direction circonférentielle, et la pluralité de tiges en plastique renforcé de fibres de verre sont disposées sur un côté intérieur de la gaine extérieure (10) ;
   **caractérisé en ce que** la couche résistante au gel (64) comprend une base résistante au gel (65) et une capsule A et une capsule B disposées circonférentiellement à l'intérieur de la base résistante au gel (65), la capsule A et la capsule B sont construites pour être capables de subir une réaction chimique et de libérer de la chaleur dans une condition prédéfinie, et la couche d'isolation à stockage d'énergie (63) est construite pour être capable de stocker de l'énergie calorifique ;
   dans lequel la capsule A et la capsule B sont identiques en nombre, la capsule A comprend un premier corps de capsule et un premier réactif disposé dans le premier corps de capsule, et le premier réactif comprend du polyol de polyester, de l'huile de silicone hydrosoluble, et de l'eau distillée ;
   la capsule B comprend un second corps de capsule et un second réactif disposé dans le second corps de capsule, et le second réactif comprend du diisocyanate de diphénylméthane, de la diamine de triéthylène, et du dilaurate de dibutylétain, dans lequel un rapport massique du polyol de polyester par rapport au diisocyanate de diphénylméthane varie de 1,6 à 3,33 ;
   dans lequel au moins un du premier corps de capsule et du second corps de capsule comprend une première couche de protection (661) et une seconde couche de protection (662) disposée dans la première couche de protection (661), et un module d'élasticité de la seconde couche de protection (662) est supérieur à un module d'élasticité de la première couche de protection (661).

**2.** Câble optique résistant au gel, au feu, et aux rats selon la revendication 1, dans lequel la couche d'isolation à stockage d'énergie (63) comprend une pluralité de capsules de stockage d'énergie à transition de phase disposées le long d'une direction circonférentielle, et un matériau à transition de phase est prévu à l'intérieur des capsules de stockage d'énergie à transition de phase pour permettre aux capsules de stockage d'énergie à transition de phase de collecter et de stocker de la chaleur lorsqu'une température externe s'élève, et de libérer de la chaleur lorsque la température externe s'abaisse ou est constante.

**3.** Câble optique résistant au gel, au feu, et aux rats selon la revendication 1, dans lequel un réactif est prévu dans la seconde couche de protection (662), et la seconde couche de protection (662) est pourvue d'une pluralité de trous d'effusion (663).

**4.** Câble optique résistant au gel, au feu, et aux rats selon la revendication 1, dans lequel un réactif est prévu dans une cavité enfermée par la seconde couche de protection (662) et dans un écart formé entre la première couche de protection (661) et la seconde couche de protection (662).

**5.** Câble optique résistant au gel, au feu, et aux rats selon l'une quelconque des revendications 1 à 4, dans lequel le câble optique résistant au gel, au feu, et aux rats comprend en outre au moins deux tiges en plastique renforcé de fibres de verre disposées circonférentiellement à l'intérieur de la couche résistante au gel (64) à des intervalles, et les au moins deux tiges en plastique renforcé de fibres de verre divisent un intérieur de la couche résistante au gel (64) en au moins deux espaces distincts.

**6.** Câble optique résistant au gel, au feu, et aux rats selon l'une quelconque des revendications 1 à 4, dans lequel la base résistante au gel (65) est capable de subir une déformation élastique dans un environnement de gel, et un module d'élasticité du corps de capsule de la capsule A est supérieur à un module d'élasticité de la base résistante au gel (65), et un module d'élasticité du corps de capsule de la capsule B est supérieur à un module d'élasticité de la base résistante au gel (65).

**7.** Câble optique résistant au gel, au feu, et aux rats selon l'une quelconque des revendications 1 à 4, dans lequel la couche résistante au gel (64) est construite pour être capable d'avoir une fonction tampon dans la condition prédéfinie, et la condition prédéfinie est que : un degré de déformation radiale η d'un côté du câble optique est supérieur ou égal à une épaisseur r de la couche résistante au gel (64).

**8.** Câble optique résistant au gel, au feu, et aux rats selon la revendication 7, dans lequel une épaisseur de la couche résistante au gel (64) a une plage exprimée par :

$$r \geq \frac{D_0 + \sigma_{max}}{2 \cdot \varepsilon} \left( \sqrt{\frac{\rho_{water}}{\rho_{ice}}} - 1 \right),$$

$D_O$ étant un diamètre extérieur total du câble optique, $\sigma_{max}$ étant une épaisseur maximum d'une couche de glace à l'extérieur du câble optique, $\rho_{water}$ étant une densité d'eau à 0 °C, $\rho_{ice}$ étant une densité de glace à 0 °C, et $\varepsilon$ étant un coefficient de déformation de la couche résistante au gel (64).

**9.** Câble optique résistant au gel, au feu, et aux rats selon l'une quelconque des revendications 1 à 4, dans lequel le câble optique résistant au gel, au feu, et aux rats comprend en outre une structure ignifuge disposée dans la couche résistante au gel (64) ; et/ou,
le câble optique résistant au gel, au feu, et aux rats comprend également une structure résistante aux rats disposée dans la couche résistante au gel (64).

**10.** Câble optique résistant au gel, au feu, et aux rats selon l'une quelconque des revendications 1 à 4, dans lequel chaque tige en plastique renforcé de fibres de verre est également pourvue d'une structure répulsive aux rats.

**11.** Câble optique résistant au gel, au feu, et aux rats selon la revendication 10, dans lequel la structure répulsive aux rats est au moins une rainure de logement (91) disposée dans chaque tige en plastique renforcé de fibres de verre, et une poudre médicamenteuse répulsive aux rats située dans la rainure de logement (91).

**12.** Câble optique résistant au gel, au feu, et aux rats selon la revendication 11, dans lequel la rainure de logement (91) est au nombre d'un, et la rainure de logement (91) entoure en spirale une paroi extérieure de chaque tige en plastique renforcé de fibres de verre ; ou, la rainure de logement (91) est au nombre d'au moins deux, et les au moins deux rainures de logement (91) sont agencées circonférentiellement autour de la tige en plastique renforcé de fibres de verre à des intervalles, et chaque rainure de logement (91) s'étend le long d'une direction axiale de la tige en plastique renforcé de fibres de verre.

13. Câble optique résistant au gel, au feu, et aux rats selon l'une quelconque des revendications 1 à 4, dans lequel le câble optique résistant au gel, au feu, et aux rats comprend en outre une première couche de blocage d'eau (61) disposée entre l'âme de câble et la couche d'isolation à stockage d'énergie (63), et une seconde couche de blocage d'eau (62) disposée entre la couche d'armure (9) et la gaine extérieure (10) ; et/ou,
la couche résistante au feu (3) est faite de polyoléfine ignifuge céramisée.

1
2
3
4
5
61
62
63
64
9
10

FIG. 1

FIG. 2

FIG. 3

FIG. 4

FIG. 5

FIG. 6

FIG. 7

**EP 4 524 635 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 115657231